# EUROPEAN PATENT APPLICATION

(11) **EP 2 612 741 A1**
(43) Date of publication of application: **10.07.2013**
(21) Application number: 12382002.9
(22) Date of filing: 04.01.2012
(51) Int. Cl.: B29B 17/02, B26D 1/00, B26F 3/02, B26D 1/04, B26D 7/02

(54) **Removal device and method for removing the casing from a tire or part thereof**

(71) Applicant: GOMAVIAL SOLUTIONS, S.L., 20018 Donosti - San Sebastián (ES)
(72) Inventor: Romero Marion, Leandro, 20018 Donostia - San Sebastián (ES); Mateos Torrero, Alexander, 20018 Donostia - San Sebastián (ES); Ferrón Celma, Pablo, 20018 Donostia - San Sebastián (ES)
(74) Representative: ABG Patentes, S.L.

(57) **Abstract**

The present invention describes a device which allows removing the casing from a tire or part of a tire allowing the subsequent use thereof as an independent product in other industries. The two methods allowing such removal are also object of the invention.
The removal device for removing the casing (C) from a tire (N) or part thereof, has a main structure comprising:
• a first support (3) mainly extending into a plane (P) adapted for perimetral support,
• a second support (2) in which there are arranged supporting or securing means (2.1) adapted for either securing a bead or a sidewall of the casing (C) located on one of the sides of the tire (N), or for applying pressure on the same bead or on the sidewall of the casing (C),
• guiding means (2.2) for guiding the second support (2) to allow the axial movement of said support (2) where the axial movement (E) is perpendicular to the plane (P),
• driving means (2.3) of the second support (2) for driving it according to the direction imposed by the guiding means (2.2),
wherein the driving means (2.3) are adapted for lowering the bead or sidewall of the casing (C) towards the opposite side of the tire (N) to separate the casing (C) from the rest of the tire (N) by ripping.

## Description

### Object of the Invention

The present invention describes a device which allows removing the casing from a tire or part of a tire allowing the subsequent use thereof as an independent product in other industries. Two methods allowing such removal are also object of the invention.

### Background of the Invention

Recycling tires disposed of each year is of great importance today since they make up one of the largest wastes in civilized societies. Thus, more than 230,000 tons of worn tires are generated each year in Spain.

At least three main layers must be provided in the tire manufacturing process: the tread band, which can be formed by textile fibers embedded in rubber or only rubber in the case of truck tires; the metal mesh, formed by a generally oblique framework of wires; and the casing on which the other two layers are arranged. As indicated by the name, the fibers of the casing in radial tires are radial fibers. Depending on the type of vehicle, the tire can contain more than one metal mesh and more than one tread layer. After manufacturing the tire these layers are not distinguished through an inner separation surface but rather are embedded in the rubber and spaced from one another providing different resistance functions to the overall tire performance.

When the outer tread band has lost the groove depth needed for proper traction with the asphalt, the tire is disposed of.

In the state of the art, there are different alternatives for proceeding with these used tires, such as for example:
- Technologies outside material recycling systems, which include recapping, making use of the metal casing of the tire.
- Mechanical treatments where the tire is ground.
- Size reduction technologies by means of milling which allows obtaining rubber powder. The processes applied can be mechanical processes at room temperature, or cryogenic or wet milling.
- Regeneration technologies: recovering or reclaiming and devulcanizing.
- Other technologies such as pyrolysis and thermolysis.

The most common solutions, for example, are therefore based on completely grinding used tires, subsequently removing their components using complex machines. Said machines follow a grinding process which requires a lot of energy, in addition to using large and expensive magnets for removing the metal mesh scrap.

The main technical problem solved by the present invention is to provide a simple and economical alternative in tire recycling. In the state of the art, a tire is considered a set of materials mixed in a complex manner from which the components thereof are to be reclaimed, searching for ways to separate each component, i.e., the rubber or the metal parts.

The present invention allows obtaining new products from the tire or from a part thereof. It can be interpreted that tire manufacture is an initial manufacturing phase of these new products therefore the steps of the invention themselves complete these initial manufacturing steps until obtaining the desired product.

### Description of the Invention

The present invention proposes a set of steps for carrying out two methods, particularly applicable by means of a device such as that claimed in claim 1 for generating new products from a tire or parts thereof. Parts of the tire are included because it is possible that the tire has been previously worked on to remove some of its parts. As mentioned, the present invention starts from a complete tire or from a tire from which some component has been removed, such as the tread band for example. For the sake of brevity, throughout the document the word tire will indiscriminately refer to the complete tire or to the tire even though it lacks some of its parts. Thus, when the sidewall of the tire is mentioned, it will also correspond with part of the sidewall.

A removal device for removing the casing from a tire or part thereof is thus described, where the device comprises:
- *a first support mainly extending into a plane adapted for* perimetral support,
   It is necessary to initially place the tire in the removal device such that it is possible to secure or to simply support the tire. The plane adapted for perimetral support is perpendicular to the central axis of rotation of the tire in the usual operating position.
- *a second support in Which there are arranged supporting or securing means adapted for either securing a bead or a sidewall of the casing located on one of the sides of the tire, or for applying pressure on the same bead or on the sidewall of the casing,* The device comprises elements capable of applying pressure on or securing a bead of the casing, where said elements are moveable. A cut which allows generating a separate section of the casing with respect to the rest of the tire is made previously or simultaneously.
- *guiding means for guiding the second support to allow the axial movement of said support where the axial movement is perpendicular to the plane,* In other words, the axial movement of the second support is parallel to the central axis of rotation of the tire in the operating position. Guiding means allowing this movement are configured.
- *driving means of the second support for driving it according to the direction imposed by the guiding means,* The supporting or securing means exert pressure or securing force on the tire and the driving means for driving the support of the supporting or securing means cause a pulling or apply a pressure. Pulling or applying pressure on the bead of the casing causes the progressive separation of the casing with respect to the rest of the tire, two surfaces which converge into a ripping origin progressing through the rubber being generated. These surfaces are located between the casing and the adjacent structures. One surface is the one associated with the obtained section and the other surface is the one which results inside the tire structure which is on the tire supporting support. This pulling or pressure must be such that the surfaces are generated without the fibers tearing or without the reinforcements and metal meshes either in the removed section or in the parts of the tire which are in the support emerging to the surface. The driving means can be electric means, mechanical means, hydraulic means, etc.
- *the driving means are adapted for lowering the bead or sidewall of the casing towards the opposite side of the tire to separate the rest of the tire by ripping.* These means can be configured in different embodiments. When pulling or pressure occurs at different points (at as many points as there are supporting or securing means), for example, homogenously distributed along the entire perimeter of the tire, a uniform tear is formed progressing in the form of a crack. The device is such that it establishes means for carrying out the continuous pulling or applying continuous pressure in the direction established in accordance with the method according to a second aspect of the invention. In a first embodiment according to a first method, the pulling is either performed from the bead secured by the supporting or securing means towards the other bead, which is supported on the first support, or the pressure is performed on the bead on which the supporting or securing means are supported towards the other bead or towards the first sidewall, supported on the first support. In a second embodiment according to a second method, the pulling is performed from the bead secured by the supporting or securing means towards the other side of the tire from which the bead has been able to be removed.

This second aspect of the invention comprises two removal methods for removing the casing from a tire or part thereof (in the event that an element has been previously separated as mentioned above, such as the tread band for example). Thus, the first removal method for removing the casing (C) from a tire (N) or part thereof comprises the following steps:
*a. making a first perimetral cut in the shoulder of the tire such that it allows generating a ripping origin for separating the casing from the rest of the tire,* It is necessary to make two perimetral cuts (steps a and d), one in each shoulder of the tire, through which the ripping will subsequently be guided. These steps can be performed as independent steps in this method or could have been performed previously in the case of starting from a tire from which some of its parts have already been removed, such as the tread band for example. The cut can be made prior to ripping or continuously and at the same time as the ripping, accompanying the pulling movement and thus aiding ripping and separating layers. The term ripping will be used throughout the description to designate the generation of a crack and separation of the casing from the metal band. The progression of generating separation surfaces by ripping is according to a radial direction, nevertheless, the fibers of both the casing and those in structures immediately adjacent to one of the ripping surfaces (according to the radial direction of the tire), i.e., the metal mesh, are usually oblique. These perimetral cuts in the shoulders are necessary to guide the progression of the separation surfaces generated as a result of pulling or applying pressure between the casing and the first metal mesh, whether or not they are accompanied by continuous cutting.
*b. supporting the tire with the first sidewall, opposite that of the first perimetral cut, on the first support,* If a single cut is initially made, the tire is supported on the sidewall opposite the sidewall, called the first sidewall, on which the first perimetral cut has been made. If cuts have been made beforehand, in the event of starting from a tire from which some of its parts have been removed, such as the tread band for example, or if two cuts have initially been made, one on each sidewall, then the choice of the sidewall on which the tire rests is irrelevant.
*c. applying pressure or pulling force on the bead of the casing corresponding to the second sidewall opposite the first supporting sidewall in a direction perpendicular to the supporting plane and in a direction of moving one bead closer to the other, thus generating a progressive ripping from the perimetral cut for separating the casing until reaching or exceeding the midplane of the tire,* The bead of the casing of the second sidewall on which a perimetral cut has been made is secured or pressed, this bead is opposite the bead or first supported sidewall, and said bead is pulled or pressed in a direction having a projection parallel to the surface generated in the tire, which is in turn perpendicular to the main plane of the tire, i.e., direction parallel to the axis of rotation of the tire. The pulling or pressure direction is towards the opposite bead, i.e., the one which is supported (first sidewall). Said pulling is performed or said pressure is applied until the surfaces generated by ripping reach or exceed the midplane of the tire, i.e., a complete separation of the casing is not made in a first or single ripping. Indicating that it must have a projection parallel to the surface generated in the tire is a way to express that the pulling or pressure must have a force component parallel to the surface immediately generated by ripping. This parallel force component is the separation component which allows the generated surfaces to progress by ripping. As mentioned, this ripping can be accompanied at the same time by an optional continuous cut; i.e., during ripping advance, the origin of the generated crack can be attacked by a tool such as cutting means for example favoring said advance movement. According to this method partially separating the casing is achieved such that:
   ○ The ripping progresses radially.
   ○ On the sides, the generated ripping surfaces always start from the perimetral cuts, preventing new ripping surfaces starting from the ends of the cords or fibers reaching the sidewalls from being generated. If this were the case, the generated band would end with fibers or cords protruding from the band.
   ○ The ripping results in two surfaces, one surface in the obtained band and another surface in the inner part of the tire structure which is in the support for supporting the tire. The ripping progresses through the rubber leaving the fibers both of the obtained casing section and those which are maintained in the tire structure embedded under the generated surfaces. In order to be progressive, the ripping will ideally be performed in a continuous and constant manner, although ripping at intervals would be possible.
*d. making a second perimetral cut in the shoulder opposite the second sidewall Where the first perimetral cut has been made,* As mentioned, this step can be performed as the initial step in this method, as the intermediate step after having generated a first progressive ripping in the opposite shoulder, or could have been performed previously in the event of starting from a tire from which some of its parts have been removed, such as the tread band for example.
*e*. *supporting the tire on the second sidewall opposite that of the second perimetral cut, on the first support,* After having performed a partial ripping between the rubber embedded in the casing and the rubber embedded in the adjacent layer, such as the metal mesh or the first metal mesh for example, if there is more than one, where said partial ripping has been made until the surfaces generated by ripping reach or exceed the midplane of the tire, the tire is supported by the second sidewall opposite that of the second perimetral cut, coinciding with the sidewall where the casing is partially separated from the adjacent layer.
*f. applying pressure or pulling force on the bead of the casing corresponding to the first sidewall opposite the second supporting sidewall in a direction perpendicular to the supporting plane and in the direction of moving one bead closer to the other thus generating a progressive ripping from the second perimetral cut for separating the casing until reaching the first ripping completely separating the casing from the rest of the tire.* The bead of the casing on which the second perimetral cut has been made is secured, this bead is opposite the bead or second supported sidewall, and said bead is pulled in a direction having a projection parallel to the surface generated in the tire, which is in turn perpendicular to the main plane of the tire or parallel to the axis of rotation of the tire. In this case the pulling is performed or the pressure is applied in the direction opposite the direction of the previous pulling or pressure (the tear is from the opposite sidewall) until reaching the first ripping, the casing is therefore completely separated from the adjacent layer. This second ripping can optionally be accompanied by a continuous cut to facilitate separating layers.

And the second removal method for removing the casing from a tire or part thereof comprises the following steps:
*a. making a cut in the shoulder of one side of the tire for removing a sidewall from the tire,* In the second method of carrying out the invention one of the sidewalls is removed from the tire by making a cut in the shoulder of the tire. The casing is always separated from the rest of the tire in a single ripping as a result of this removal, the number of operations and position changes are therefore reduced.
*b. making a perimetral cut in the opposite shoulder of the tire such that it allows generating a ripping origin for separating the casing from the rest of the tire,* It is necessary to make a perimetral cut in the shoulder of the tire of the side the sidewall of which has not been removed, through which the ripping will subsequently be guided. Like the cuts made in the first method, this step can be performed as an independent step in this method or could have been performed previously in the case of starting from a tire from which some of its parts have already been removed, such as the tread band for example. And also like the first method, the cut can be made prior to ripping or continuously and at the same time as the ripping, accompanying the pulling movement and thus aiding ripping and separating layers. The progression of generating separation surfaces by ripping is according to a radial direction, nevertheless, the fibers of both the casing and those in structures immediately adjacent to one of the ripping surfaces (according to the radial direction of the tire), i.e., the metal mesh, are usually oblique. These perimetral cut in the shoulder is necessary to guide the progression of the separation surfaces generated as a result of pulling or applying pressure between the casing and the first metal mesh, whether or not they are accompanied by continuous cutting.
*c. supporting the tire on the first support leaving the unremoved sidewall on said support and establishing the support through the inside of the sidewall of the tire,* The tire is supported on the first support, internally supporting the unremoved sidewall on said support. Thus, the inner part of the casing will surround this first support.
*d. providing an outward radial support on the surface of the outer side generated in the perimetral cut,* A support is located at the cutting point in the shoulder of the tire. At that point two surfaces through which the ripping will be guided are generated. The support will be outwardly radial preventing the rest of the tire from giving way together with the casing on which the pulling is performed or pressure is applied during the ripping.
*e. applying pressure or pulling force on the bead of the unremoved casing in the direction perpendicular to the supporting plane in the direction of moving towards the side of the tire lacking sidewall to generate a progressive ripping until achieving the complete separation of the casing from the rest of the tire.* The bead of the casing of the sidewall on which a perimetral cut has been made is secured or pressed, this bead is that opposite the removed bead or sidewall, and said bead is pulled or pressed on in a direction having a projection parallel to the surface generated in the tire, which is in turn perpendicular to the main plane of the tire, i.e., direction parallel to the axis of rotation of the tire. The pulling or pressure direction is towards the bead which would be the opposite bead, i.e., the removed sidewall. Said pulling is performed or pressure is applied until completely separating the casing from the rest of the tire in a first or single ripping. Indicating that it must have a projection parallel to the surface generated in the tire is a way to express that the pulling or pressure must have a force component parallel to the surface immediately generated by ripping. This parallel force component is the separation component which allows the generated surfaces to progress by ripping. As mentioned, this ripping can be accompanied at the same time by an optional continuous cut; i.e., during the ripping advance, the generated crack origin can be attacked by a tool such as cutting means for example favoring said advance movement. According to this method completely separating the casing is achieved such that:
   ○ The ripping progresses radially.
   ○ On the sides, the generated ripping surfaces always start from the perimetral cuts preventing new ripping surfaces starting from the ends of the cords or fibers reaching the sidewalls from being generated. If this were the case, the generated band would end with fibers or cords protruding from the band.
   ○ The ripping results in two surfaces, one surface in the obtained casing section and another surface in the inner part of the tire structure which is in the support for supporting the tire. The ripping progresses through the rubber leaving the fibers both of the obtained casing section and those which are maintained in the tire structure embedded under the generated surfaces. In order to be progressive, the ripping will be ideally performed in a continuous and constant manner, although ripping at intervals would be possible.

### Description of the Drawings

The foregoing and other features and advantages of the invention will be better understood from the following detailed description of a preferred embodiment, provided by way of nonlimiting illustrative example, in reference to the attached drawings.
Figure 1 shows a perspective view of a first embodiment of the device. In this example, the driving means of the second support move the supporting or securing means for supporting or securing the bead or sidewall of the casing closer to or away from the first support of the tire and allow pulling or applying pressure on the casing.
Figure 2 also shows a perspective view of the supporting or securing means separately from the assembly of the device in the same embodiment.
Figures 3 and 4 separately and together show the supporting or securing means and the cutting tool in its sliding support of the embodiment of Figure 1.
Figure 5 shows a detailed view of the cutting tool and its supports of the embodiment of Figure 1.
Figures 6 and 7 separately and together show the driving means for the lowering and the axially movable tubular body intended for entering the perimetral crack for separating the casing to guide the ripping advance in the combined and rest position and in combination, of the embodiment of Figure 1.
Figures 8 to 11 are detailed views of the cross-section of a tire and how the ripping progresses according to the first method of carrying out the invention.
Figures 12 and 13 are detailed views of the cross-section of a tire and how the ripping progresses according to the second method of carrying out the invention.

### Detail Description of the Invention

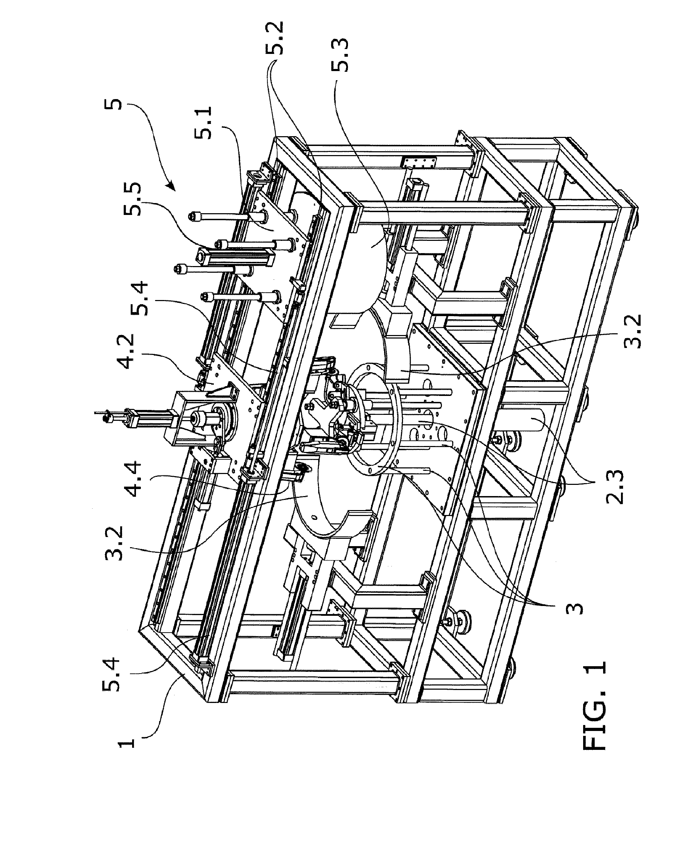

Figures 1 to 7 show different viewpoints of a device according to a first embodiment of the invention according to a first method.

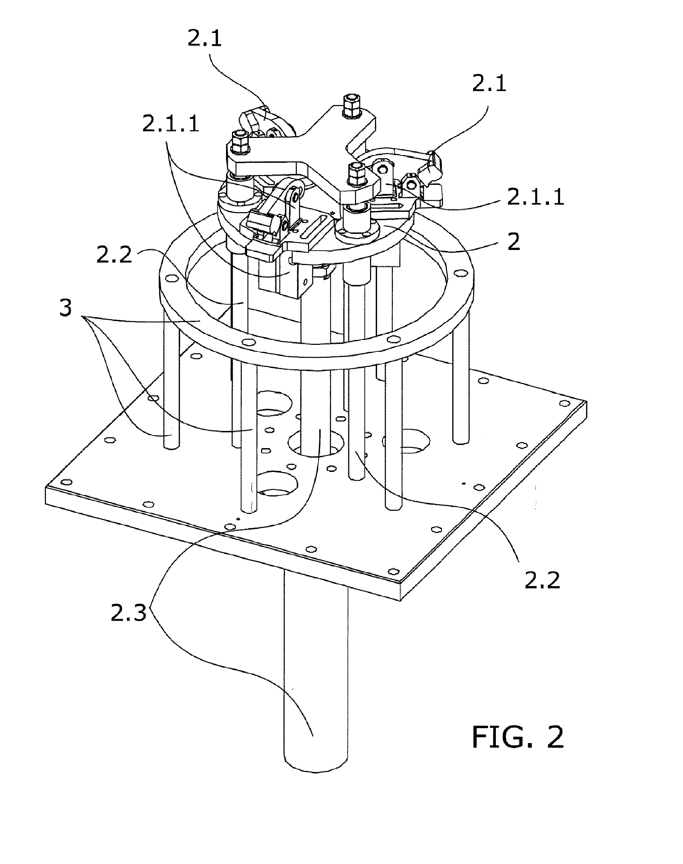

In this embodiment observed in Figure 1, the different components of the device are supported on a frame (1) which functions as a structural support. The shape of the frame (1) according to this embodiment is mainly orthohedral. The main structure with a first support (3) mainly extending into a plane (P) adapted for supporting a sidewall of the tire (N) is observed in this embodiment. This first support (3) can be a tube, a surface supported by columns, etc. It is also observed that in a position inside the tire (N) or inside with respect to the first support (3), there is located the second support (2) with supporting or securing means (2.1) adapted in this embodiment for securing the bead of the second sidewall of the casing (C) corresponding to the sidewall opposite the first sidewall resting in the first support (3). These elements are seen in more detail in Figure 2 separately from the rest of the device. The supporting or securing means (2.1) for the bead or sidewall of the casing (C) in this embodiment are one or more clamps (2.1) operated by actuators (2.1.1). To allow a homogenous pulling of the casing (C), in this embodiment a plurality of clamps (2.1) is arranged radially distributed in equidistant in the support (2). Three clamps (2.1) have been shown in this example. Another possibility in another embodiment (not shown) is that the supporting or securing means (2.1) are a pressure element, such as a tubular element or a platform of suitable size, which applies pressure on the inner part of the tire (N), for lowering only the casing (C) which would be separated from the rest of the tire (N) through tearing.

The guiding means (2.2) for guiding the second support (2) allow the axial movement of said support (2) where the axial movement (E) is perpendicular to the plane (P), and the driving means (2.3) of the second support (2) allow driving along the guiding means (2.2). These means allow pulling or applying pressure on the casing (C) separating it from the rest of the tire, thus the driving means (2.3) are adapted for lowering the bead or sidewall of the casing (C), in this embodiment secured by means of the supporting or securing means (2.1) towards the opposite bead or sidewall of the casing (C), which is supported in the first support (3).

In a particular embodiment of the invention, the generation of the crack or progressive separation of the casing (C) is aided with a cutting device, not depicted in the drawings. The cut can be made prior to ripping or continued and simultaneously, accompanying the pulling movement and thus aiding ripping and separating layers. As mentioned, the term ripping will be used throughout the description to designate the crack generation and separation of the casing (C) from the metal band (M), the cut may or may not be included.

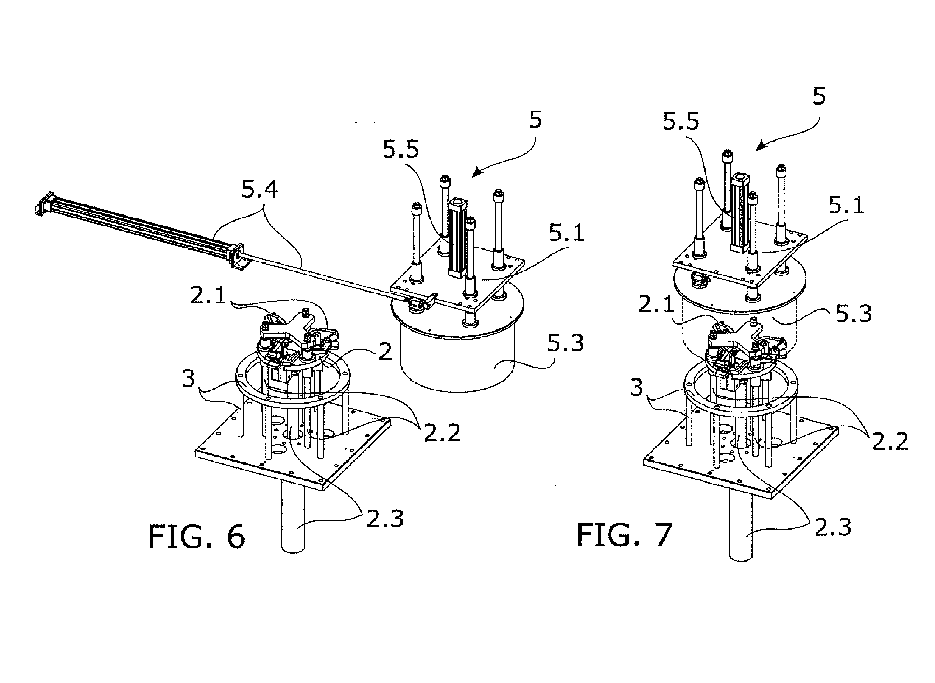

It is observed that in this embodiment an axially movable tubular body (5.3) intended for entering in the perimetral crack for separating the casing (C) to guide the ripping advance has been included in the upper part of the frame (1). In the particular case of embodiment of the invention where the ripping is accompanied by a cut, according to an embodiment this tubular body (5.3) is replaced with the cutting tool. According to another embodiment this tubular body (5.3) for guiding and furthermore a cutting means favoring the ripping are simultaneously found. The tubular body (5.3) and its movement relative to the first support (3) and second support (2) can be separately observed from the rest of the elements in Figures 6 and 7. This tubular body prevents the tire (N) which is ripped from moving or deforming such that the ripping progresses in an undesired direction. This tubular body (5.3) has a second movement direction, as observed in this embodiment, to allow withdrawing it to a rest position. Thus, the tubular body (5.3) is located in a mobile carriage (5.1) that can slide on guides (5.2) for moving to the rest position, where the mobile carriage (5.1) has two driving means (5.4 and 5.5):
- first driving means (5.4) linked between the mobile carriage (5.1) and the main structure for moving the tubular body (5.3) between the operating position and the rest position; and,
- second driving means (5.5) linked between the mobile carriage (5.1) and the tubular body (5.3) for moving the tubular body (5.3) in an axial direction to penetrate the perimetral cut.

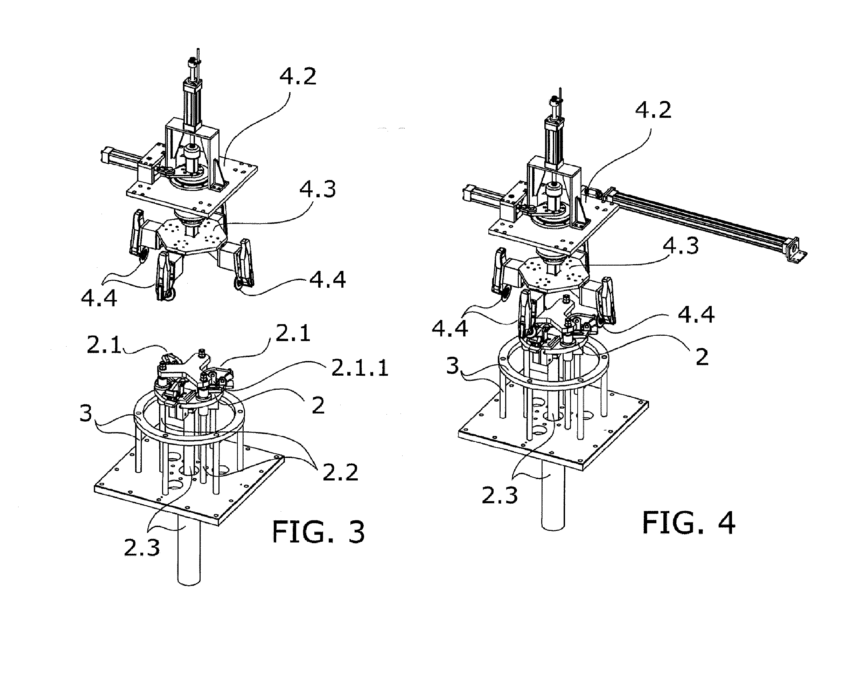

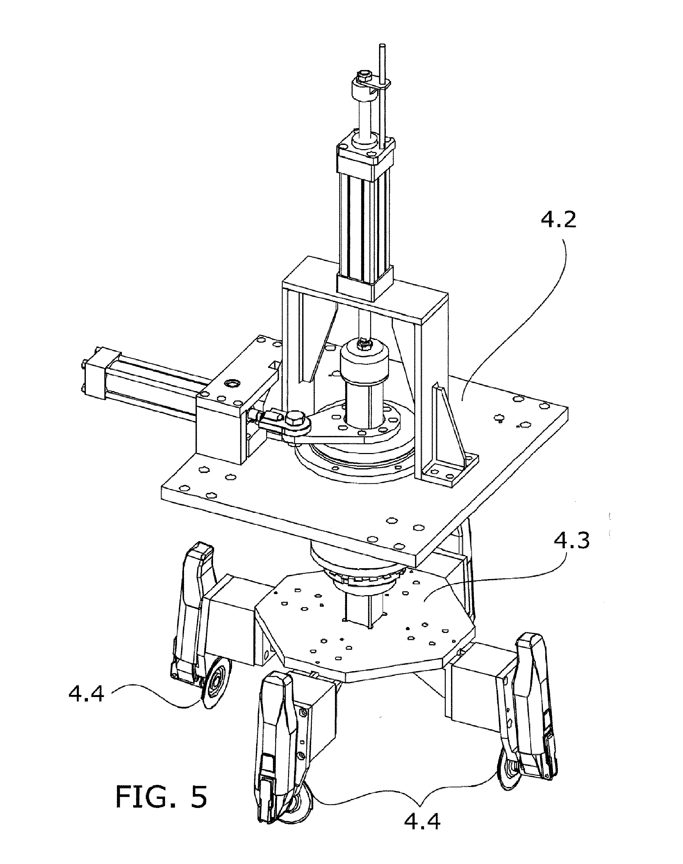

At least one cutting tool (4.4) suitable for making a perimetral cut in the shoulder of the tire (N) has also been included in this embodiment. The cutting tool (4.4) and the first support (3) and second support (2) can be observed separately from the rest of the elements in Figures 3 and 4. The cutting tool (4.4) and its supports (4.2, 4.3) can be seen in Figure 5. As mentioned, making this cut would not be necessary if cut has been previously made as a result of having removed some element from the tire (N) such as for example the tread band (K). The cutting tool (4.4) is linked to a sliding support (4.2) capable of moving between two positions, an operating position which allows carrying out the perimetral cut of variable depth in the shoulder of the tire (N); and a second rest position. In the embodiment it has been chosen to allow that when the cutting tool (4.4) is in the operating position, the tubular body is in the rest position, and vice versa, since these elements do not work simultaneously. The position in which the cutting tool (4.4) is in the operating position and the tubular body (5.3) is in the rest position is thus observed in Figure 1.

The cutting tool (4.4) is linked to a positionable support (4.3) which is the one capable of moving between two positions where this support (4.3) has an axial movement for approaching the tire (N) for the cutting tool (4.4) to penetrate the tire (N) and a rotational movement for making the perimetral cut in the sidewall of the tire (N). The cutting tool (4.4) can be a circular blade, a semi-circular blade, a spatula blade or a spindle-shaped blade. In this embodiment there is arranged a plurality of cutting tools (4.4) equidistantly distributed along the periphery such that the support (4.3) of the cutting tools only requires a specific angle for making the perimetral cut in the shoulder of the tire (N). Making use of four cutting tools (4.4), (the fourth tool is not seen in said drawing) which would perform a 90° rotation each is thus observed in Figure 5. A single cutting tool (4.4) which will make the complete perimetral cut (360° rotation) could be arranged in another embodiment.

In the embodiment depicted in Figure 1, to allow stabilizing the position of the tread band (K) or of the outer part of the rest of the tire (N) while the ripping crack advances, perimetral support or securing means (3.2) are used on the tread band (K) of the tire (N) or on the outer part of the rest of the tire (N). The perimetral support means (3.2) prevent the rest of the tire (N), or part of the tire (N) which is not the casing (C), from being dragged by the supporting or securing means (2.1) which upon moving or upon securing the bead could force this part which is not the casing (C) to be moved integrally with the first support (3). In other words, the part of the tire other than the casing located outside the perimetral support means (3.2) is stably sustained without collapsing inwardly, dragged by the pulling force generated by the crack advance in the ripping. In this embodiment two perimetral support means (3.2) facing one another are used.

In another embodiment there is further arranged turning means not depicted in the drawings held on the tread band (K) or the outermost layer of the tire (N) to allow turning the position of the tire (N) with respect to the axis of the plane (P) of the tire (N). Thus, a rotational force is provided for rotation about the middle axis of the tire (N) which allows turning to change from being supported on one sidewall to being supported on the opposite sidewall, where upon applying the rotational force on the tire (N) a rotation is applied by means of an outer support on the tread band (K) or the outermost layer of the tire (N) to rotate the position thereof according to the axis of the midplane (P) of the tire (N). In the first removal method, the tire (N) is supported in the second sidewall opposite that of the second perimetral cut following these steps:
i. if there is a tool (for example the cutting tool (4.4) on the support (3) of the tire (N), it is removed,
ii. any securing of the tire (N) to the first support (3) is released,
iii. the tire (N) is secured to turning means, this turning can be manual in which case turning means will not be used or there will not be turning means.
iv. if necessary, the tire (N) is moved to a spacious site to allow the turning,
v. the tire (N) is manually turned or by means of the turning means,
vi. the tire (N) is again supported in the first support (3),
vii. the tire (N) is released from the turning means if it has been used.

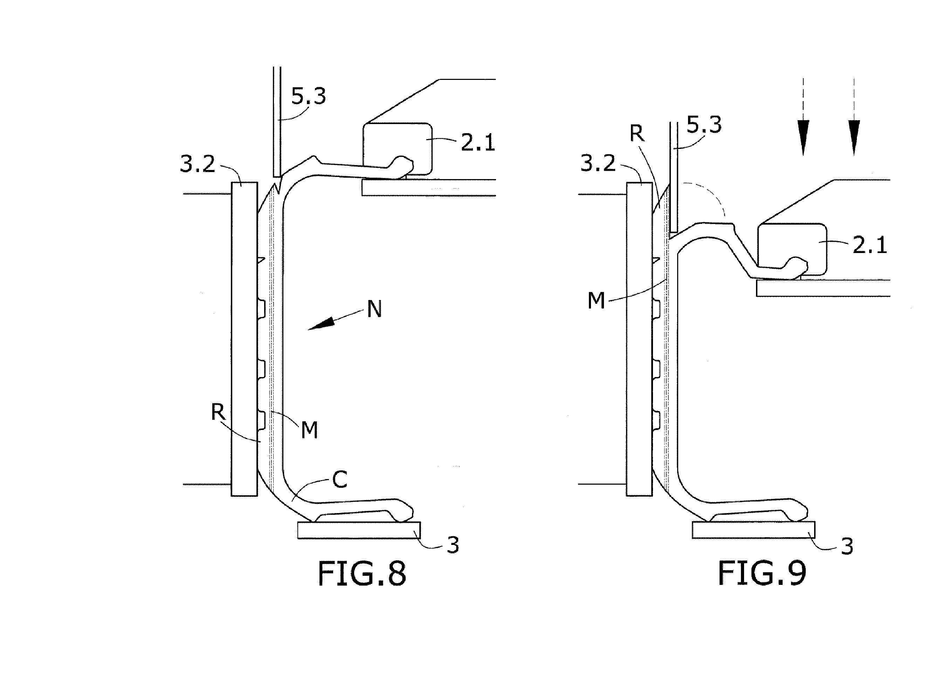

The cross-section of a tire and how the ripping progresses in one embodiment are seen in Figures 8 to 11. The tire (N) in cross-section, supported in the supporting means (3) is thus observed in Figure 8. The first cut has been made, which is observed in the upper part of the tire between the casing (C) and the metal mesh (M). The clamps (2.1) secure the bead on which the first cut has been made, which is the bead opposite that supported in the supporting means (3). In this figure the outer part of the tire (N), in this case the tread band (K), is adjacent to the perimetral support means (3.2), to allow stabilizing the position of the tread band (K) while the ripping crack advances. The axially movable tubular body (5.3) intended for entering the perimetral separation crack of the casing (C) to guide the ripping advance is also observed in the upper part of Figure 8.

In Figure 9, the clamps (2.1) for guiding the ripping advance have started the lowering according to the direction of the arrows, separating the casing (C) from the rest of the tire (N). It is observed that the tubular body (5.3) has been partially lowered entering the crack. In the event of making a cut simultaneously with the ripping, in another embodiment described, the cutting tool intended to aid tearing would be located in the place of the tubular body (5.3). As mentioned, this process is **characterized in this** step by applying pressure or pulling force on the bead of the casing (C) corresponding to the second sidewall opposite the first supported sidewall in a direction perpendicular to the supporting plane (P) and in the direction of moving one bead closer to the other thus generating a progressive ripping from the perimetral cut for separating the casing (C) until reaching or exceeding the midplane of the tire (N).

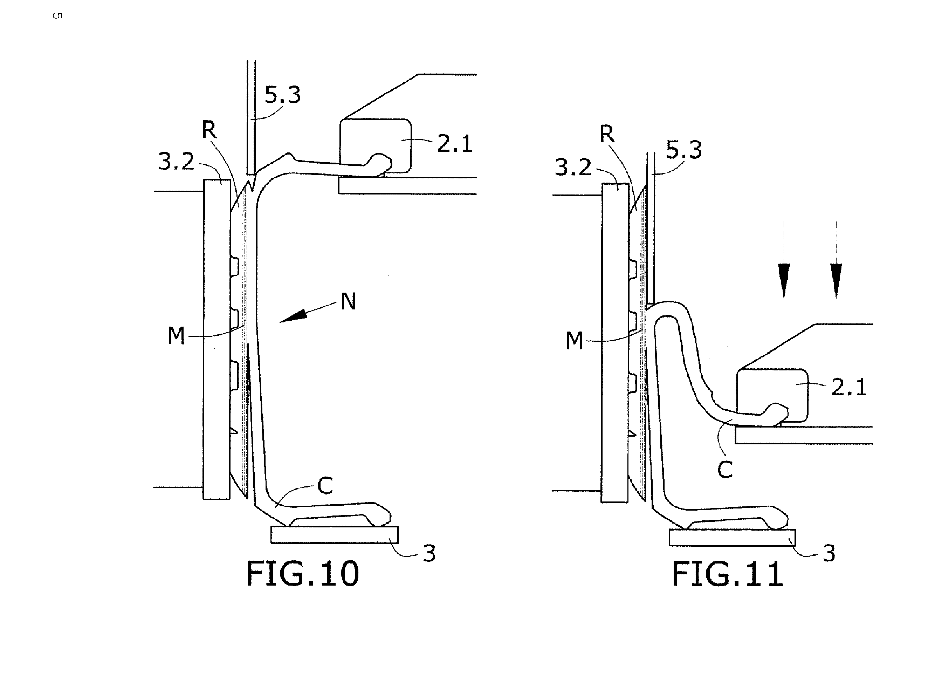

When said midplane of the tire (N) has been reached, in this embodiment, the tire (N) is turned, it is again supported on the supporting means (3), a second cut is made, depicted in Figure 10, and the clamps (2.1) again perform a pulling, but now in a direction opposite the pervious pulling, depicted in Figure 10 with arrows. The ripping thus progresses because the clamps (2.1) perform a pulling in the direction of moving one bead closer to the other thus generating a progressive ripping from the second perimetral cut for separating the casing (C).

This pulling is performed by the clamps (2.1) until reaching the first ripping completely separating the casing (C) from the rest of the tire (N). The time just before the two rips coincide and the casing (C) is completely separated from the rest of the tire is thus observed in Figure 11.

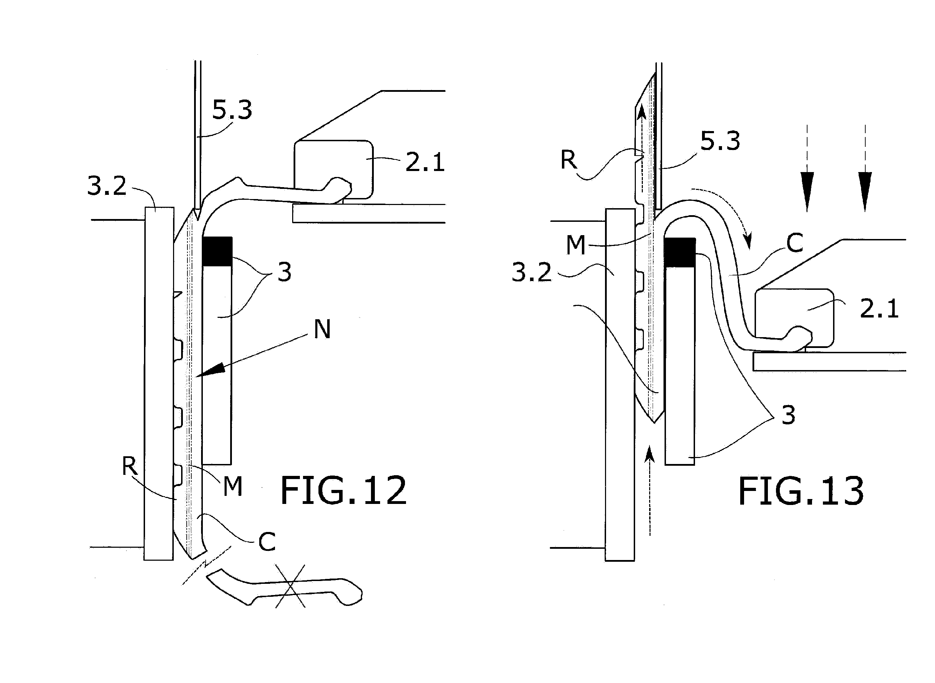

Figures 12 and 13 depict the cross-section of a tire and of how the ripping progresses according to the second method of carrying out the invention. In this second method in view of the description of the invention, method for removing the casing (C) from a tire (N) or part thereof, the elements contributing to the different steps would be:
a. making a cut in the shoulder of one side of the tire (N) with a cutting tool for removing a sidewall from the tire, this tool in one embodiment is the cutting tool (4.4), therefore the tire (N) must be turned after cutting. In another embodiment this cut is manually made with a blade or any sharp element;
b. making a perimetral cut in the opposite shoulder of the tire (N) such that it allows generating a ripping origin for separating the casing (C) from the rest of the tire (N), in a embodiment this cut can also be made with the cutting tool (4.4), in another embodiment this cut is manually made with a blade or any sharp element;
c. supporting the tire (N) on the first support (3) leaving the unremoved sidewall on said support (3) and establishing the support through the inside of the sidewall of the tire (N). As seen in Figures 12 and 13, the first support (3) comprises a part acting as a support, depicted as a black square, but as mentioned, this first support (3) can also be a tube or a cylindrical element, which would result in a depiction such as those in Figures 12 and 13.
d. providing an outward radial support on the surface of the outer side generated in the perimetral cut. According to this second method the outer part of the tire is supported by its inner part in the axially movable tubular body (5.3) to place it on the cut and intended for guiding the perimetral separation crack of the casing (C) as a result of lifting the tire (N). In this second method of embodiment, the tubular body (5.3) is static.
e. applying pressure or pulling force on the bead of the unremoved casing (C) in a direction perpendicular to the supporting plane (P) in the direction of moving towards the side of the tire (N) lacking sidewall to generate a progressive ripping until achieving the complete separation of the casing from the rest of the tire (N). In this second method, the tubular body (5.3) and the first support (3) are static, and the clamps (2.1) are those which cause the tearing of the tire upon pulling the sidewall of the tire (N) and, while at the same time the sidewall is lowered with the rest of the casing (C), the rest of the tire (N) which is being torn rises being supported in the tubular body (5.3) and the yet to be torn part also rises being supported in the first support (3).

In this second method, the outward radial support on the surface of the outer side generated in the perimetral cut is established by means of a tubular body (5.3) spaced with respect to the first support (3) to leave a perimetral slit through which the casing slides in the ripping of step e). The space between these two elements will preferably be between 5 and 8 mm.

In any of the two depicted methods and in their embodiments an outer support on the tread band (K) is applied to stabilize the position thereof and the ripping advance can be added in an embodiment variant of each method, where upon applying the pressure or pulling force on the bead or sidewall of the casing (C) it results in the ripping or separation of the casing (C) with respect to the rest of the tire (N). This outer support is carried out with the perimetral support means (3.2), depicted in Figures 1 and 8 to 13.

In one embodiment of the invention, after removing the casing (C) from the tire (N), if there is a tread band (K), the tread band (K) is removed to obtain at least one metal band (M). As mentioned at the beginning, a tire (N) will be formed by at least 3 layers: the tread band (K), which can be formed by textile fibers embedded in rubber or only rubber in the case of truck tires; the metal mesh or band (M) formed by a generally oblique framework of metal wires; and the casing (C) on which the other two layers are arranged. As indicated by the name, the fibers of the casing (C) in radial tires are radial fibers. Depending on the type of vehicle, the tire (N) can contain more than one metal mesh (M) and more than one tread band (K).

## Claims

1. A removal device for removing the casing (C) from a tire (N) or part thereof, wherein the device has a main structure comprising:
• a first support (3) mainly extending into a plane (P) adapted for perimetral support,
• a second support (2) in which there are arranged supporting or securing means (2.1) adapted for either securing a bead or a sidewall of the casing (C) located on one of the sides of the tire (N), or for applying pressure on the same bead or on the sidewall of the casing (C),
• guiding means (2.2) for guiding the second support (2) to allow the axial movement of said support (2) where the axial movement (E) is perpendicular to the plane (P),
• driving means (2.3) of the second support (2) for driving it according to the direction imposed by the guiding means (2.2),
wherein the driving means (2.3) are adapted for lowering the bead or sidewall of the casing (C) towards the opposite side of the tire (N) to separate the casing (C) from the rest of the tire (N) by ripping.

2. The device according to claim 1, **characterized in that** it has an axially movable tubular body (5.3) intended for entering the perimetral crack from separating the casing (C) to guide the ripping advance.

3. The device according to claim 2, **characterized in that** the tubular body (5.3) has guides (5.2) providing it with a second movement direction to allow withdrawing it to a rest position.

4. The device according to claim 3, **characterized in that** the tubular body (5.3) is located in a mobile carriage (5.1) that can slide on the guides (5.2) for moving to the rest position where the mobile carriage (5.1) has two driving means (5.4, 5.5):
• first driving means (5.4) linked between the mobile carriage (5.1) and the main structure for moving the tubular body (5.3) between the operating position and the rest position; and,
• second driving means (5.5) linked between the mobile carriage (5.1) and the tubular body (5.3) for moving the tubular body (5.3) in an axial direction to penetrate the perimetral cut.

5. The device according to claim 1, **characterized in that** it comprises a cutting device adapted for acting on the origin of the tearing crack to favor its advance.

6. The device according to claim 1, **characterized in that** the supporting or securing means (2.1) for the bead or sidewall of the casing (C) are one or more clamps (2.1) operated by actuators (2.1.1).

7. The device according to claim 1, **characterized in that** it comprises at least one cutting tool (4.4) adapted for making a perimetral cut in the shoulder of the tire (N).

8. The device according to claim 7, **characterized in that** the cutting tool (4.4) is linked to a sliding support (4.2) capable of moving between two positions, an operating position which allows making the perimetral cut in the shoulder of the tire (N), and a second rest position.

9. The device according to claim 7 or 8, **characterized in that** the cutting tool (4.4) is linked to a support (4.3) which is capable of moving between two positions where this support (4.3) has:
• an axial movement for approaching the tire (N) for the cutting tool (4.4) to penetrate the tire (N) and,
• a rotational movement for making the perimetral cut in the sidewall of the tire (N).

10. The device according to any of claims 7 to 9, **characterized in that** it has a plurality of cutting tools (4.4) equidistantly distributed along the periphery such that the support (4.3) of the cutting tools only requires a specific angle for making the perimetral cut in the shoulder of the tire (N).

11. The device according to any of the preceding claims, **characterized in that** it has perimetral support means (3.2) on the outside of the tire (N) to allow stabilizing the position thereof while the ripping crack advances.

12. The device according to any of the preceding claims, **characterized in that** it has turning means (3.3) supported on the tread band (K) or the outermost layer of the tire (N) to allow turning the position of the tire (N) with respect to the axis of the plane (P) of the tire (N).

13. A removal method for removing the casing (C) from a tire (N) or part thereof, comprising the following steps:
a. making a first perimetral cut in the shoulder of the tire (N) such that it allows generating a ripping origin for separating the casing (C) from the rest of the tire (N),
b. supporting the tire (N) with the first sidewall, opposite that of the first perimetral cut, on the first support (3),
c. applying pressure or pulling force on the bead of the casing (C) corresponding to the second sidewall opposite the first supporting sidewall in a direction perpendicular to the supporting plane (P) and in the direction of moving one bead closer to the other thus generating a progressive ripping from the perimetral cut for separating the casing (C) until reaching or exceeding the midplane of the tire (N),
d. making a second perimetral cut in the shoulder opposite the sidewall where the first perimetral cut has been made, first sidewall,
e. supporting the tire (N) in the second sidewall, opposite that of the second perimetral cut, on the first support (3),
f. applying pressure or pulling force on the bead of the casing (C) corresponding to the first sidewall opposite the second supporting sidewall in a direction perpendicular to the supporting plane (P) and in the direction of moving one bead closer to the other thus generating a progressive ripping from the second perimetral cut for separating the casing (C) until reaching the first ripping completely separating the casing (C) from the rest of the tire (N).

14. The removal method according to claim 13, **characterized in that** upon applying the pressure or pulling force on the bead of the casing (C) resulting in the ripping or separation of the casing (C) with respect to the rest of the tire (N), a tubular body (3.2) having a diameter coinciding with the ripping origin is introduced to guide the ripping progress.

15. The removal method according to claim 13, **characterized in that** pulling or applying pressure on the bead of the casing (C) generating a progressive ripping is previously or simultaneously aided with a cut acting in the tearing origin.

16. The removal method for removing the casing (C) from a tire (N) or part thereof comprising the following steps:
a. making a cut in the shoulder of one side of the tire (N) for removing a sidewall from the tire,
b. making a perimetral cut in the opposite shoulder of the tire (N) such that it allows generating a ripping origin for separating the casing (C) from the rest of the tire (N),
c. supporting the tire (N) on the first support (3) leaving the unremoved sidewall on said support (3) and establishing the support through the inside of the sidewall of the tire (N),
d. providing an outward radial support on the surface of the outer side generated in the perimetral cut,
e. applying pressure or pulling force on the bead of the unremoved casing (C) in the direction perpendicular to the supporting plane (P) in the direction of moving towards the side of the tire (N) lacking sidewall to generate a progressive ripping until achieving the complete separation of the casing from the rest of the tire (N).

17. The method according to claim 16, **characterized in that** the outward radial support on the surface of the outer side generated in the perimetral cut is established by means of a tubular body (5.3) spaced with respect to the first support (3) to leave a perimetral slit through which the casing slides in the ripping of step e).

18. The removal method according to claims 13 to 17, **characterized in that** upon applying the pressure or pulling force on the bead or sidewall of the casing (C) resulting in the ripping or separation of the casing (C) with respect to the rest of the tire (N), an outer support is applied on the tread band (K) to stabilize the position thereof and the ripping advance.

19. The method according to any of claims 13 to 18, wherein if the tire (N) has a tread band (K), the tread band (K) is removed to obtain a metal band (M).
